# EUROPEAN PATENT APPLICATION

(11) **EP 4 737 071 A1**
(43) Date of publication of application: **06.05.2026**
(21) Application number: 25209309.1
(22) Date of filing: 17.10.2025
(51) Int. Cl.: B25J 9/16, B25J 13/00

(54) **ROBOT SYSTEM**

(30) Priority: 01.11.2024 JP 2024192777
(71) Applicant: DAIHEN Corporation, Yodogawa-ku Osaka-shi Osaka 532-8512 (JP)
(72) Inventor: KITAGAWA, Ryo, Osaka-shi, Osaka, 5328512 (JP); NAKAGAWA, Shinichiro, Osaka-shi, Osaka, 5328512 (JP)
(74) Representative: Manitz Finsterwald Patent- und Rechtsanwaltspartnerschaft mbB

(57) **Abstract**

To readily cause a robot to operate just as an operator imagined.

A robot system includes: a display control portion which causes image data having been captured by an imaging portion and based on imaging information at least including a work object to be worked by an industrial robot to be displayed on a screen; an acquiring portion which acquires three-dimensional data corresponding to at least the work object; a linking portion which links the image data and the three-dimensional data as data in a user coordinate system; a designation accepting portion which accepts, on a screen, a designation of a target position to be a destination of movement of a work tool portion of the industrial robot; a coordinate transforming portion which transforms the target position in the user coordinate system into the target position in a robot coordinate system of which an origin is a specific location of the industrial robot; a trajectory calculating portion which calculates a trajectory from a current position of the work tool portion to the target position; and an operation control portion which causes the work tool portion to operate to the target position according to the calculated trajectory.

## Description

### Background

### Field

The present invention relates to a robot system.

### Description of Related Art

Japanese Patent No. 7326911 discloses a system that teaches robot operations in a real environment by simulating a robot model in a virtual space. In the system, an operation of a robot is taught using teaching data created by executing off-line teaching using a robot model in a virtual space. Off-line teaching is processing in which a robot model and an object model showing a shape of an object are displayed in a virtual space and teaching points are set according to user input. Teaching data is data describing a plurality of teaching points in chronological order.

### Summary

The system according to Japanese Patent No. 7326911 operates the robot in the real environment so that a position and a posture of the robot approaches a position and a posture of the robot model included in a simulation image created when simulating the robot model. Furthermore, the robot model and the object model used for the simulation are created with CAD data. However, since sizes, an arrangement, and the like of robots and work objects in a real environment do not always conform to CAD data, misalignment and the like readily occur, making it difficult to cause robots in the real environment to operate just as an operator imagined (to cause robots to operate in a manner that does not conflict with the real environment and to reach a target position). In addition, because it is difficult to comprehend an orientation of a robot coordinate system and the like from the operator's point of view, it is difficult for the operator to match a direction in which the operator causes the robot to operate on the system with a direction in which the robot operates in the real environment.

In consideration thereof, an object of the present invention is to provide a robot system capable of readily causing a robot to operate just as an operator imagined.

A robot system according to an aspect of the present invention includes: a display control portion which causes image data having been captured by an imaging portion and based on imaging information at least including a work object to be worked by an industrial robot to be displayed on a screen; an acquiring portion which acquires three-dimensional data corresponding to at least the work object; a linking portion which links the image data and the three-dimensional data as data in a user coordinate system of which an origin is a position of a feature point included in either the image data or the three-dimensional data or an imaging position; a designation accepting portion which accepts, on a screen, a designation of a target position to be a destination of movement of a work tool portion of the industrial robot; a coordinate transforming portion which transforms the target position in the user coordinate system into the target position in a robot coordinate system of which an origin is a specific location of the industrial robot; a trajectory calculating portion which calculates a trajectory from a current position of the work tool portion to the target position; and an operation control portion which causes the work tool portion to operate to the target position according to the calculated trajectory.

According to this aspect, image data including a work object of an industrial robot can be caused to be displayed on a screen, the image data and three-dimensional data corresponding to the work object can be linked as data in a user coordinate system, a designation of a target position to be a destination of movement of a work tool portion can be accepted on a screen, the target position in the user coordinate system can be transformed into the target position in a robot coordinate system, a trajectory from a current position of the work tool portion to the target position can be calculated, and the work tool portion can be caused to operate to the target position according to the calculated trajectory.

Accordingly, by designating the target position on the screen, the operator can move the work tool portion to the designated target position.

In the aspect described above, the three-dimensional data may be three-dimensional point cloud data corresponding to objects included in the image data measured by a distance measuring portion.

According to this aspect, objects that exist within a measurement range of the distance measuring portion can be represented as three-dimensional point cloud data.

In the aspect described above, the designation accepting portion need not accept a designation of the target position at a position where point cloud data does not exist.

According to this aspect, the destination of movement of the work tool portion can be limited to locations where an object such as a work object exists.

In the aspect described above, the user coordinate system may be a three-dimensional coordinate system of which an origin is a specific position of a marker included in the image data, and a positional relationship between the marker and the industrial robot may be specified.

According to this aspect, even when the imaging portion moves, the target position can be specified as coordinates in a user coordinate system based on the marker of which a positional relationship with the industrial robot is fixed.

In the aspect described above, when another target position that differs from the target position is designated by the designation accepting portion while the work tool portion is being operated to the target position by the operation control portion, the trajectory calculating portion may calculate a trajectory from a current position of the work tool portion to the other target position as a changed trajectory, and the operation control portion may operate the work tool portion to the other target position according to the calculated changed trajectory.

According to this aspect, by specifying another target position, the trajectory to the target position can be changed flexibly.

In the aspect described above, the designation accepting portion may further accept a designation of a relative position for adjusting the target position, and the trajectory calculating portion may calculate the trajectory from a current position of the work tool portion to the target position after being adjusted by the relative position.

According to this aspect, by specifying the relative position, fine adjustment of the target position can be readily performed.

According to the present invention, a robot system capable of readily causing a robot to operate just as an operator imagined can be provided.

### Brief Description of Drawings

FIG. 1 is a diagram illustrating a configuration of a robot system according to an embodiment;
FIG. 2 is a diagram illustrating functional components included in a control portion of an arithmetic apparatus shown in FIG. 1;
FIG. 3 is an example of a screen displayed on a display portion;
FIG. 4 is an example of the screen displayed on the display portion; and
FIG. 5 is a flow chart for describing an example of an operation of the robot system.

### Detailed Description

A preferred embodiment of the present invention will be described with reference to the accompanying drawings. Note that elements designated by same reference characters in the drawings have identical or substantially identical configurations. In addition, since the drawings are schematic in nature, dimensions and proportions of each component may differ from actual dimensions and proportions.

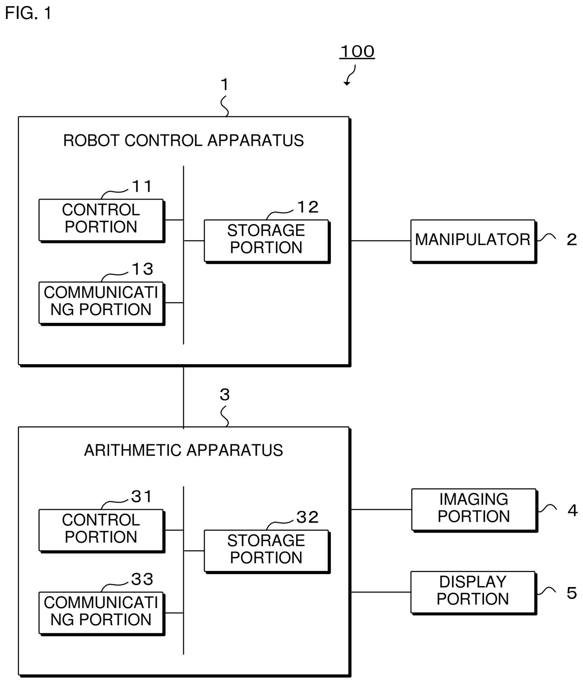

FIG. 1 is a diagram illustrating a configuration of a robot system 100 according to an embodiment. For example, the robot system 100 includes a robot control apparatus 1, a manipulator (industrial robot) 2, an arithmetic apparatus 3, an imaging portion 4, and a display portion 5. Note that a configuration may be adopted in which the arithmetic apparatus 3 is included in the robot control apparatus 1.

The robot control apparatus 1 and the arithmetic apparatus 3, the robot control apparatus 1 and the manipulator 2, and the arithmetic apparatus 3, the imaging portion 4, and the display portion 5 are connected via a network, respectively. The network may be a wireless communication-based network such as WiFi (Wireless Fidelity) or a wired communication-based network such as a communication cable.

The manipulator 2 is a welding robot that performs arc welding on a workpiece that is a work object according to work conditions set by the robot control apparatus 1. For example, the manipulator 2 has an articulated arm provided on a base member fixed to a factory floor or the like, and a welding torch (work tool portion) connected to a tip of the articulated arm as one of the work tools.

The manipulator 2 is also a cooperative robot that is designed to work with people and is operable in response to external forces. The operator can also directly manipulate the manipulator 2 by applying an external force directly to the manipulator 2 by hand and moving the manipulator 2 in accordance with the external force.

The robot control apparatus 1 is a control unit which controls operation of the manipulator 2. For example, the robot control apparatus 1 includes a control portion 11, a storage portion 12, and a communicating portion 13.

The control portion 11 is a processor and controls the manipulator 2 by executing a work program or the like stored in the storage portion 12.

The storage portion 12 is a computer-readable recording medium which stores a program for realizing various functions of the robot control apparatus 1, various kinds of data used by the program, and the like.

The communicating portion 13 is a communication interface which controls communication with the manipulator 2 and the arithmetic apparatus 3 connected via the network.

Note that the robot control apparatus 1 may further include a welding power supply portion. For example, the welding power supply portion supplies a welding current, a welding voltage, and the like to the manipulator 2 in accordance with predetermined welding work conditions to generate an arc between the tip of a welding wire and a workpiece. The welding power supply portion may be separate from the robot control apparatus 1.

The arithmetic apparatus 3 is an apparatus which executes processing such as when the operator teaches an operation of the manipulator 2 and, for example, the arithmetic apparatus 3 is a tablet-type teach pendant. Note that a part of or all of the functions of the arithmetic apparatus 3 to be described later may be included in the robot control apparatus 1 or included in a server apparatus on the cloud. For example, the arithmetic apparatus 3 includes a control portion 31, a storage portion 32, and a communicating portion 33.

The control portion 31 is a processor and controls each portion of the arithmetic apparatus 3 by executing a program stored in the storage portion 32. Functions of the control portion 31 will be described later.

The storage portion 32 is a computer-readable recording medium which stores a program for realizing various functions of the arithmetic apparatus 3, various kinds of data used by the program, and the like.

The communicating portion 33 is a communication interface which controls communication with the robot control apparatus 1 connected via the network.

For example, the imaging portion 4 is a 3D camera equipped with a distance measurement sensor and also functions as a 2D camera. The imaging portion 4 is preferably positioned at a position where a work space including at least a workpiece can be photographed. For example, the imaging portion 4 may be mounted near a member of the manipulator 2 to which a welding torch is to be attached or fixedly arranged around the manipulator 2 or in a robot cell. Alternatively, the imaging portion 4 may be included in the arithmetic apparatus 3.

The distance measurement sensor is a sensor capable of measuring a distance to an object. As the distance measurement sensor, for example, a LiDAR (Light Detection and Ranging) sensor, a millimeter wave sensor, an ultrasonic sensor, or the like can be used.

Note that the imaging portion 4 need not necessarily be equipped with a distance measurement sensor and the imaging portion 4 and the distance measurement sensor may be separately provided or the distance measurement sensor may be omitted. When omitting the distance measurement sensor, it is preferable to calculate three-dimensional coordinate data corresponding to an object based on a plurality of images taken of the object from a plurality of different positions. In this case, known three-dimensional measurement methods using a stereo method can be used.

For example, the display portion 5 is a display apparatus including a touch panel which displays images (2D and 3D) of a subject captured by the imaging portion 4 and which accepts input of a manipulation instruction and the like by the operator. For example, the display portion 5 may be included in the arithmetic apparatus 3 as a display with a touch panel.

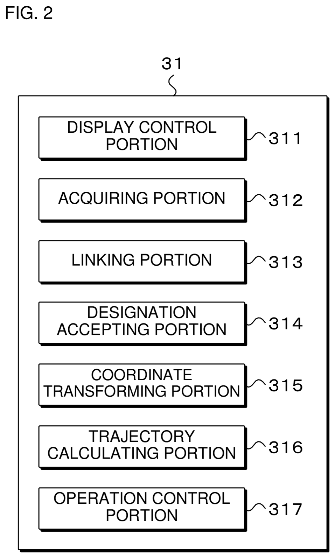

FIG. 2 is a diagram illustrating functional components included in the control portion 31 of the arithmetic apparatus 3. As functional components, for example, the control portion 31 of the arithmetic apparatus 3 includes a display control portion 311, an acquiring portion 312, a linking portion 313, a designation accepting portion 314, a coordinate transforming portion 315, a trajectory calculating portion 316, and an operation control portion 317.

The display control portion 311 acquires two-dimensional image data captured by the imaging portion 4 and causes the image data to be displayed on a screen of the display portion 5. The two-dimensional image data preferably includes a workpiece and the manipulator 2.

At this point, a marker may be attached to a specific location (for example, near a member to which a welding torch is to be attached) of the manipulator 2. In doing so, the attached marker is preferably managed so as to be specifiable in a robot coordinate system. Accordingly, a position of the manipulator 2 or a workpiece displayed on the screen together with the marker can be specified based on the position of the marker as a position in the robot coordinate system. The robot coordinate system need only be a coordinate system that can be recognized by the manipulator 2 that is a robot. In addition, an AR marker is preferably used as the marker.

The acquiring portion 312 acquires three-dimensional data corresponding to at least a workpiece. The three-dimensional data is point cloud data measured by a distance measuring portion and is three-dimensional point cloud data corresponding to objects included in the two-dimensional image data. Note that the three-dimensional data may be CAD data of a workpiece and a workpiece table.

The linking portion 313 links two-dimensional image data and three-dimensional data as data in a user coordinate system. As the user coordinate system, for example, a three-dimensional coordinate system of which an origin is a specific position of a marker included in the two-dimensional image data can be used. The marker is preferably managed so that a positional relationship with the manipulator 2 is fixed and the marker is specifiable as coordinates in the robot coordinate system. For example, the specific position of the marker may be a corner or a center of the marker.

When linking two-dimensional image data and three-dimensional data, three-dimensional point cloud data may be displayed superimposed on two-dimensional image data displayed on the screen and the operator may be allowed to designate a point in the point cloud data corresponding to the specific position of the marker.

Note that the origin of the user coordinate system is not limited to the specific position of the marker. For example, the origin may be a specific location of a workpiece and a specific position of the imaging portion 4 (for example, an imaging position such as a center of a lens) which are managed so that a positional relationship with the manipulator 2 is fixed and which are specifiable as coordinates in the robot coordinate system.

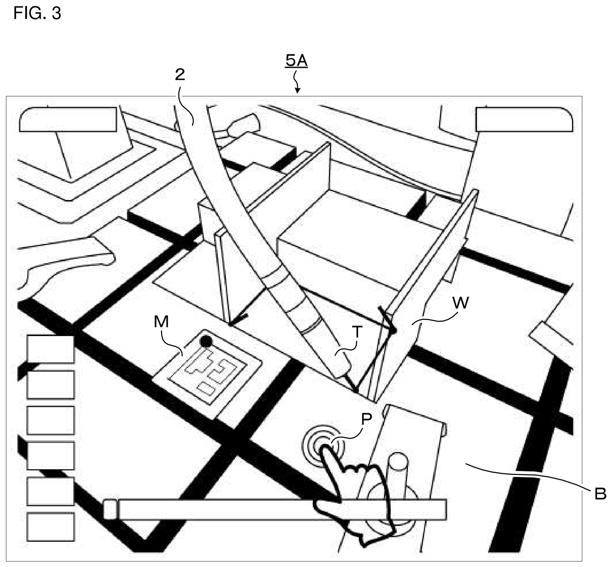

The designation accepting portion 314 accepts, on a screen, a designation of a target position to be a destination of movement of a tip of the welding torch. A specific description will be provided with reference to FIG. 3.

FIG. 3 is an example of a screen 5A displayed on the display portion 5. The screen 5A displays two-dimensional image data captured by the imaging portion 4. The screen 5A also displays a workpiece W arranged on a workpiece table B lined up in plurality, a welding torch T of the manipulator 2, and a marker M placed on the workpiece table B in front of the workpiece W. The welding torch T may be a virtual model or a real welding torch. When the operator designates a target position P to be a destination of movement of the tip of the welding torch T by touching the target position P on the screen 5A, the designation accepting portion 314 accepts the designation of the target position P.

The designation accepting portion 314 may be configured not to accept a designation of the target position P at a position where point cloud data does not exist or in a range that cannot be reached by the tip of the welding torch T. In doing so, an error message to the effect that the position cannot be designated or an error sound may be output.

In addition, the designation accepting portion 314 may further accept a designation of a relative position for adjusting the target position P. Specifically, the target position P may be adjusted by accepting input designation of a relative position such as A mm in an X direction, B mm in a Y direction, and C mm in a Z direction.

The coordinate transforming portion 315 transforms (coordinate transformation) the coordinates of the target position P in the user coordinate system into coordinates of the target position P in the robot coordinate system. The target position P displayed on the screen is a part of two-dimensional image data drawn in the user coordinate system and the marker M included in the two-dimensional image data is managed so as to be specifiable as coordinates in the robot coordinate system. Therefore, the target position P included in the two-dimensional image data is also specifiable as coordinates in the robot coordinate system.

The trajectory calculating portion 316 calculates a trajectory from a current position of the tip of the welding torch T to the target position P. When calculating the trajectory, a trajectory that enables the welding torch T to avoid colliding with obstacles is preferably calculated based on the two-dimensional image data and the three-dimensional data. When a trajectory that enables the welding torch T to reach the target position P cannot be calculated, an error message to the effect that a trajectory cannot be calculated or an error sound may be output.

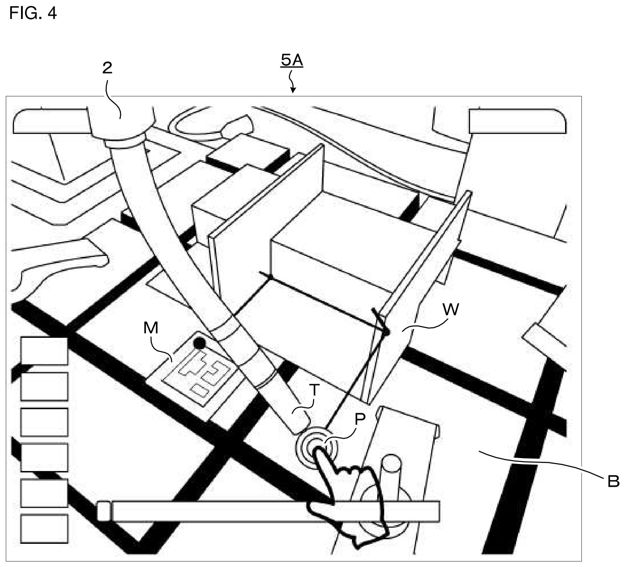

The operation control portion 317 operates the tip of the welding torch T to the target position P according to the calculated trajectory. When the current position of the tip of the welding torch T and the target position P match or when a difference between the current position of the tip of the welding torch T and the target position P becomes smaller than a predetermined threshold, the operation control portion 317 ends the movement operation of the welding torch T. A specific description will be provided with reference to FIG. 4.

FIG. 4 illustrates a state where, after the target position P has been designated on the screen 5A shown in FIG. 3, the tip of the welding torch T has moved to the target position P.

A trigger that causes the manipulator 2 to start an operation to the target position P may be, for example, when the operator designates the target position P on the screen 5A after pressing a "start position designation" button or when the operator presses a "start movement" button while designating the target position P.

When another target position that differs from the target position P is designated by the designation accepting portion 314 while the tip of the welding torch T is being operated to the target position P by the operation control portion 317, the trajectory calculating portion 316 calculates a trajectory from a current position where the tip of the welding torch T is positioned at the time point of designation of the other target position to the other target position as a changed trajectory.

The operation control portion 317 operates the tip of the welding torch T to the other target position according to the calculated changed trajectory.

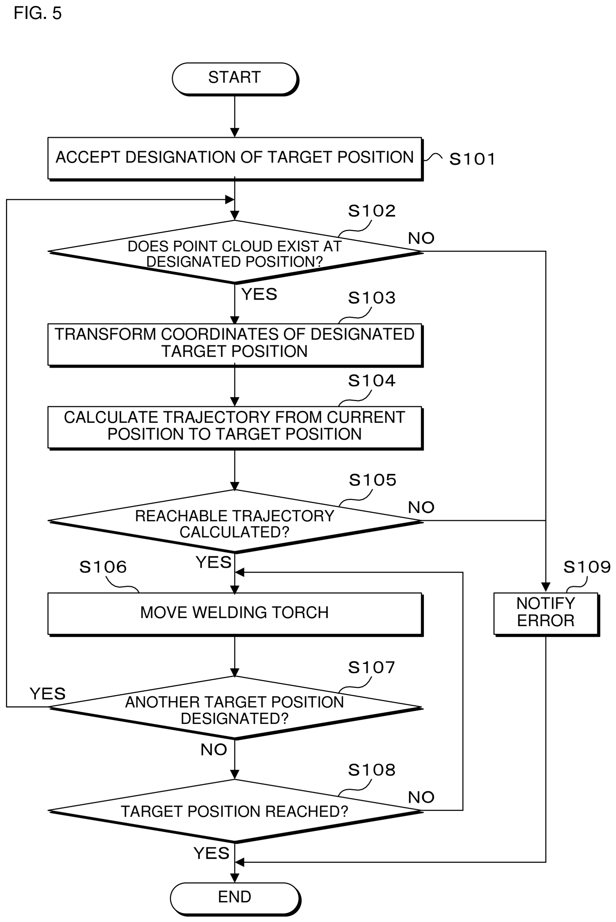

An example of an operation of the robot system 100 will be described with reference to FIG. 5.

First, the designation accepting portion 314 accepts a designation of the target position P to be a destination of movement of the tip of the welding torch T (step S101).

Next, the designation accepting portion 314 determines whether or not point cloud data exists at the designated target position P (step S102). When a determination of NO is made (step S102: NO), an error notification is output (step S109) and the present operation is ended.

When it is determined in the determination of step S102 that point cloud data exists at the designated target position P (step S102: YES), the coordinate transforming portion 315 transforms the coordinates of the target position P in the user coordinate system into coordinates of the target position P in the robot coordinate system (step S103).

Next, the trajectory calculating portion 316 calculates a trajectory from the current position of the tip of the welding torch T to the target position P (step S104).

Next, the trajectory calculating portion 316 determines whether or not a trajectory that enables the designated target position P to be reached has been calculated (step S105). When a determination of NO is made (step S105: NO), an error notification is output (step S109) and the present operation is ended.

When it is determined in the determination of step S105 that a trajectory that enables the designated target position P to be reached has been calculated (step S105: YES), the operation control portion 317 moves the tip of the welding torch T according to the trajectory calculated in step S104 (step S106).

Next, the designation accepting portion 314 determines whether or not another target position that differs from the target position P has been designated (step S107). When a determination of YES is made (step S107: YES), the processing makes a transition to step S102.

When it is determined in the determination of step S107 that another target position is not designated (step S107: NO), the operation control portion 317 determines whether or not the tip of the welding torch T has reached the target position P based on the current position of the tip of the welding torch T and the target position P (step S108). When a determination of NO is made (step S108: NO), the processing makes a transition to step S106.

When it is determined in the determination of step S108 that the tip of the welding torch T has reached the target position P (step S108: YES), the present operation is ended.

As described above, with the robot system 100 according to the embodiment, two-dimensional image data including a welding torch T (a virtual model or a real welding torch) of the manipulator 2 and the workpiece W can be caused to be displayed on a screen, the image data and three-dimensional data corresponding to the workpiece W can be linked as data in a user coordinate system, a designation of the target position P to be a destination of movement of the tip of the welding torch T can be accepted on a screen, the target position P in the user coordinate system can be transformed into the target position P in a robot coordinate system, a trajectory from a current position of the tip of the welding torch T to the target position P can be calculated, and the tip of the welding torch T can be caused to operate to the target position P according to the calculated trajectory.

Accordingly, by designating the target position P on the screen, the operator can move the tip of the welding torch T to the designated target position P. In other words, the tip of the welding torch T can be moved in a manner that does not conflict with the real environment to reach the target position P.

Therefore, with the robot system 100 according to the embodiment, the manipulator 2 can be readily operated just as the operator imagined.

### Modifications

Note that the present invention is not limited to the embodiment described above and can be implemented in various other forms without departing from the gist of the present invention. Therefore, the embodiment described above is to be considered in all respects as illustrative and not restrictive. For example, an order in which the respective processing steps described above are executed can be arbitrarily changed or the respective processing steps may be executed in parallel as long as no contradictions arise in the contents of processing.

In addition, while the display control portion 311 acquires two-dimensional image data captured by the imaging portion 4 and causes the image data to be displayed on a screen of the display portion 5 in the embodiment described above, what is to be displayed on the screen of the display portion 5 is not limited to the two-dimensional image data captured by the imaging portion 4. For example, a three-dimensional computer graphic image may be created based on the two-dimensional image data and the three-dimensional computer graphic image may be displayed on the screen of the display portion 5. For example, generative AI may be used to generate a three-dimensional computer graphic image from two-dimensional image data. In addition, image data based on imaging information including three-dimensional data captured by the imaging portion 4 may be caused to be displayed on the screen of the display portion 5.

Furthermore, while the display control portion 311 causes an image of the manipulator 2 captured by the imaging portion 4 to be displayed on the screen of the display portion 5 in the embodiment described above, a virtual model of the manipulator 2 may be displayed on the screen of the display portion 5 instead of the manipulator 2. In this case, preferably, a marker is arranged near a workpiece and the virtual model of the manipulator 2 is displayed based on the marker. Positions in the robot coordinate system of the virtual model and the workpiece which are displayed together with the marker on the screen can be specified based on the marker as follows.

(1) A photograph including the marker near the workpiece is taken and two-dimensional image data and three-dimensional point cloud data are linked in a similar manner to the embodiment described above. (2) The operator inputs a position and a posture in the robot coordinate system of the tip of the welding torch having been moved to a specific position of the marker (for example, a corner or a center of the marker). Accordingly, a position of the photographed marker can be specified by coordinates in the robot coordinate system. (3) A position in the robot coordinate system of the point cloud data linked to the image data in (1) is calculated and, at the same time, a position in the robot coordinate system of the photographed workpiece is also calculated. Accordingly, since a position on the screen can be specified as a position in the robot coordinate system, a virtual model of the manipulator 2 can be displayed on the screen.

Since a length of links, a length of the welding torch, and the like of the manipulator 2 are managed as robot information, the tip of the welding torch and the like can be calculated using the robot information.

In addition, when specifying a position on the screen as a position in the robot coordinate system, a feature point with a characteristic shape or the like may be used instead of the marker used in the embodiment and the modifications described above. In such a case, for example, a feature point displayed on the screen may be specified by searching for and extracting a portion of the three-dimensional point cloud data that matches point cloud data representing the shape of the feature point.

In addition, while the origin of the user coordinate system is set to a specific position of the marker, a specific location of the workpiece, or the specific position (imaging position) of the imaging portion 4 in the embodiment described above, the origin is not limited thereto. For example, a feature point with a characteristic shape or the like may be used as the origin of the user coordinate system. In other words, a position of a feature point included in any of the two-dimensional image data and the three-dimensional data or an imaging position can be used as the origin of the user coordinate system.

Furthermore, while the manipulator 2 that is a welding robot has been described in the embodiment, the present invention is not limited thereto. The present invention can be applied to industrial robots including handling robots for picking and other tasks and cutting and polishing robots for cutting and polishing.

## Claims

1. A robot system (100), comprising:
a display control portion (311) which causes image data having been captured by an imaging portion (4) and based on imaging information at least including a work object to be worked by an industrial robot (2) to be displayed on a screen;
an acquiring portion (312) which acquires three-dimensional data corresponding to at least the work object;
a linking portion (313) which links the image data and the three-dimensional data as data in a user coordinate system of which an origin is a position of a feature point included in either the image data or the three-dimensional data or an imaging position;
a designation accepting portion (314) which accepts, on a screen, a designation of a target position to be a destination of movement of a work tool portion of the industrial robot (2);
a coordinate transforming portion (315) which transforms the target position in the user coordinate system into the target position in a robot coordinate system of which an origin is a specific location of the industrial robot (2);
a trajectory calculating portion (316) which calculates a trajectory from a current position of the work tool portion to the target position; and
an operation control portion (317) which causes the work tool portion to operate to the target position according to the calculated trajectory.

2. The robot system (100) according to claim 1, wherein
the three-dimensional data is three-dimensional point cloud data corresponding to objects included in the image data measured by a distance measuring portion.

3. The robot system (100) according to claim 2, wherein
the designation accepting portion (314) does not accept a designation of the target position at a position where the point cloud data does not exist.

4. The robot system (100) according to claim 1, wherein
the user coordinate system is a three-dimensional coordinate system of which an origin is a specific position of a marker included in the image data, and
a positional relationship between the marker and the industrial robot (2) is specified.

5. The robot system (100) according to claim 1, wherein
when another target position that differs from the target position is designated by the designation accepting portion (314) while the work tool portion is being operated to the target position by the operation control portion (317), the trajectory calculating portion (316) calculates a trajectory from a current position of the work tool portion to the other target position as a changed trajectory, and
the operation control portion (317) operates the work tool portion to the other target position according to the calculated changed trajectory.

6. The robot system (100) according to claim 1, wherein
the designation accepting portion (314) further accepts a designation of a relative position for adjusting the target position, and
the trajectory calculating portion (316) calculates a trajectory from a current position of the work tool portion to the target position after being adjusted by the relative position.
